# EUROPÄISCHE PATENTSCHRIFT

(11) **EP 2 819 208 B1**
(45) Veröffentlichungstag und Bekanntmachung des Hinweises auf die Patenterteilung: **30.12.2015**
(21) Anmeldenummer: 13174208.2
(22) Anmeldetag: 28.06.2013
(51) Int. Cl.: H01M 2/10, B60L 11/18, B60K 1/04

(54) **Batteriesystem**
Battery system
Système de batterie

(43) Veröffentlichungstag der Anmeldung: 31.12.2014
(73) Patentinhaber: Samsung SDI Co., Ltd., Yongin-si, Gyeonggi-do (KR)
(72) Erfinder: PUCHER, Matthias, 8052 Graz (AT); FABIAN, Harald, 8510 Stainz (AT); KOJC, Miran, 2000 Maribor (SI); STEINER, Franz, 8020 Graz (AT); WÜNSCHE, Ralph, 8010 Graz (AT)
(74) Vertreter: Gulde & Partner

(56) Entgegenhaltungen:
- EP-A2- 2 533 320
- DE-A1-102009 043 635
- US-A1- 2011 143 179

## Beschreibung

### Gebiet der Erfindung

Die vorliegende Erfindung betrifft ein Batteriesystem zum Einbau in einem Kraftfahrzeug, insbesondere ein Batteriesystem umfassend ein Gehäuse bestehend aus einer Gehäuseschale und einem Gehäusedeckel, weiters umfassend zumindest zwei im Gehäuse angeordnete Batteriemodule, wobei die Batteriemodule jeweils einen Zellträger und auf dem Zellträger angeordnete Zellen umfassen.

### Stand der Technik

Derartige Batteriesysteme werden insbesondere als Hochvolt-Batterien zum Antrieb von Elektro- und Hybridfahrzeugen genutzt und verwenden meist stabile Gehäuse um darin Batteriezellen aufzunehmen und unter anderem vor mechanischen Belastungen von außen zu schützen.

Aus der DE 10 2009 043 635 A1 ist ein Batteriegehäuse, insbesondere für ein Hybrid- oder Elektrofahrzeug, bekannt, mit Außenwänden, die einen Innenraum zur Aufnahme mindestens eines Batteriemoduls einschließen, wobei innerhalb des Innenraums ein Leiterrahmen angeordnet ist, welcher zwei Längsträger und zwei Querträger aufweist zum Befestigen des mindestens einen Batteriemoduls zwischen den Querträgern.

Wenn dieses bekannte Batteriegehäuse beispielsweise bei einem Unfall an einer Stelle belastet wird, die oberhalb oder unterhalb des Längsträgers liegt, so muss das Batteriegehäuse außerordentlich massiv ausgebildet sein um die Kräfte zum Leiterrahmen abzuleiten, so dass es zu keiner Beschädigung der Batteriemodule kommt.

### Zusammenfassung der Erfindung

Es ist eine Aufgabe der Erfindung, Batteriesysteme der genannten Art zu verbessern und insbesondere ein Batteriesystem anzugeben, das einen guten Schutz der Batteriemodule vor von außen einwirkenden mechanischen Belastungen bietet und dabei ein geringes Gewicht aufweist und kostengünstig herstellbar ist.

Die Lösung der Aufgabe erfolgt durch ein Batteriesystem zum Einbau in einem Kraftfahrzeug umfassend ein Gehäuse bestehend aus einer Gehäuseschale und einem Gehäusedeckel, zumindest zwei im Gehäuse angeordnete Batteriemodule, jeweils umfassend einen Zellträger und auf dem Zellträger angeordnete Zellen, sowie einen Hilfsrahmen, wobei die Zellen über den Zellträger mit dem Hilfsrahmen verbunden sind und wobei der Hilfsrahmen mit der Gehäuseschale verbunden ist, wobei der Hilfsrahmen über einen Bügel an der Gehäuseschale abgestützt ist, wobei sich der Bügel zumindest von einem Zellträger zu einem benachbarten Zellträger erstreckt.

Dadurch dass erfindungsgemäß ein Bügel vorgesehen ist um den Hilfsrahmen an der Gehäuseschale abzustützen, ist gewährleistet, dass bei einer mechanischen Belastung von außen auf die Seite des Batteriegehäuses, an welcher der Bügel befestigt ist, die Kraft über den steifen Bügel an den Hilfsrahmen und weiter an den Zellträger weitergeleitet wird, der die Kraft beispielsweise an eine abgestützte, gegenüberliegende Seite der Gehäuseschale ableiten kann. Dadurch ist insbesondere bei einer zwischen den drucksteifen Zellträgern einwirkenden Kraft sichergestellt, dass die Kraft entlang der Breite des Batteriesystems, zumindest bis zu dem oder den benachbarten Zellträgern, zusätzlich zum Gehäuse und dem Hilfsrahmen auch über den steifen Bügel weitergeleitet wird. Der Bügel verstärkt den Hilfsrahmen daher lokal genau dort, wo eine verbesserte Kraftübertragung zwischen Krafteintrittsstelle am Gehäuse und den Zellträgern erforderlich ist.

Weiterbildungen der Erfindung sind in den abhängigen Ansprüchen, der Beschreibung sowie den beigefügten Zeichnungen angegeben.

Bevorzugt wird der Hilfsrahmen über den Bügel an der Gehäuseschale befestigt.

Bevorzugt erstreckt sich der Bügel zumindest von einem äußersten Zellträger zu einem zweiten äußersten Zellträger, auf der gegenüberliegenden Seite des Batteriesystems.

Besonders bevorzugt erstreckt sich der Bügel über die äußersten Zellträger hinaus. Damit sind auch jene Zellen, die entlang der Breite der Gehäuseschale jenseits der äußersten Zellträger von diesen nach außen abstehen, gut vor einer mechanischen Belastung geschützt. Je weiter der Bügel in der Breite -von Zellträger zu Zellträger- reicht, desto weiter ist der Bereich aus welchem der Bügel Kräfte zu den umliegenden Zellträgern ableiten kann.

Bevorzugt ist eine Befestigung zwischen dem Bügel und der Gehäuseschale zwischen den Zellträgern benachbarter Batteriemodule angeordnet, also an einer Stelle entlang der Gehäuseschale, an der sich kein Zellträger befindet. Besonders bevorzugt ist die Befestigung zwischen dem Bügel und der Gehäuseschale genau in der Mitte zwischen zwei benachbarten Zellträgern angeordnet. Dadurch ist die Verbindung zwischen Bügel und Gehäuseschale gerade an diesen Zwischenbereichen, an welchen keine direkte Krafteinleitung in die Zellträger erfolgen kann, besonders stabil.

Bevorzugt ist der Bügel in der in Einbaulage oberen Hälfte des Batteriesystems angeordnet. Je weiter unten eine äußere Kraft auf das Batteriesystem trifft, desto mehr kann die Grundfläche des Gehäuses die Belastung tragen. Trifft die Belastung weiter oben ein, so werden die Gehäusewände stark auf Biegung belastet. Im unteren Bereich des Batteriesystems übernimmt daher die Grundfläche und der Hilfsrahmen die Kraftverteilung, im oberen Bereich des Batteriesystems die Seitenwände der Gehäuseschale, der Bügel und der Hilfsrahmen.

Bevorzugt liegt der Bügel an der Gehäuseschale an einer Flanschfläche, die von einer Seitenwand der Gehäuseschale abgesetzt ist, an und ist vorzugsweise an der Flanschfläche befestigt.

Bevorzugt ist der Bügel L-förmig oder Z-förmig ausgebildet, wobei insbesondere ein vertikaler Teil des Bügels zur Kraftleitung dient und ein horizontaler Teil des Bügels der Befestigung des Bügels dient.

Besonders bevorzugt weist ein in Einbaulage vertikaler Teil des L- oder Z-förmigen Bügels zumindest abschnittsweise Sicken oder Verprägungen auf, zur Erhöhung der Steifigkeit des Bügels. Besonders wirksam sind derartige Sicken oder Verprägungen in zumindest einem Abschnitt des Bügels angeordnet, der zwischen zwei Zellträgern liegt.

Besonders bevorzugt umfasst die Gehäuseschale eine höhere Seitenwand und eine niedrigere Seitenwand.

Bevorzugt ist der Bügel an der höheren Seitenwand der Gehäuseschale abgestützt und bevorzugt auch an dieser höheren Seitenwand befestigt.

Bevorzugt ist zwischen dem Hilfsrahmen und der Gehäuseschale zumindest eine direkte Befestigung eingerichtet, insbesondere in der in Einbaulage unteren Hälfte des Hilfsrahmens. Zusätzlich zur Verwendung des versteifenden Bügels, kann der Hilfsrahmen also auch ohne Bügel, direkt an der Gehäuseschale befestigt sein.

Bevorzugt ist zwischen dem Hilfsrahmen und der höheren Seitenwand der Gehäuseschale zumindest eine direkte Befestigung eingerichtet und zwischen dem Hilfsrahmen und der niedrigeren Seitenwand der Gehäuseschale zumindest eine direkte Befestigung eingerichtet, wobei bevorzugt beide Befestigungen in der in Einbaulage unteren Hälfte des Hilfsrahmens und besonders bevorzugt an Flanschflächen der Gehäuseschalen angeordnet sind.

Bevorzugt ist alternativ oder zusätzlich zu Befestigungen an einer Seitenwand, zwischen dem Hilfsrahmen und der Grundfläche der Gehäuseschale zumindest eine, bevorzugt zumindest zwei, direkte Befestigungen eingerichtet.

Bevorzugt ist der Hilfsrahmen mit den Zellträgern der Batteriemodule in der in Einbaulage oberen Hälfte des Hilfsrahmens und bevorzugt auch in der unteren Hälfte des Hilfsrahmens verbunden, um eine gute Verbindung und Kraftleitung zwischen diesen Bauteilen sicher zu stellen.

Bevorzugt bilden die höhere Seitenwand und die Grundfläche der Gehäuseschale einen rechten Winkel.

Besonders bevorzugt schließen die niedrigere Seitenwand und die Grundfläche der Gehäuseschale einen Winkel größer als 90 Grad ein, insbesondere zwischen 95 und 105 Grad. Durch die geringere Höhe der niedrigeren Seitenwand vergrößert der größere Winkel zur Grundfläche die Abmessungen des Batteriesystems nur geringfügig.

Bevorzugt ist die Gehäuseschale ein Gussbauteil oder ein Tiefziehteil und weist somit gute Festigkeitswerte bei guter Verarbeitbarkeit auf.

### Kurzbeschreibung der Zeichnungen

Die Erfindung wird im Folgenden beispielhaft unter Bezugnahme auf die Zeichnungen beschrieben.
- Fig. 1: ist eine Draufsicht auf ein erfindungsgemäßes Batteriesystem, mit drei eingezeichneten Schnittebenen A-A, B-B und C-C.
- Fig. 2: ist eine Schnittansicht entsprechend A-A der Fig.1.
- Fig. 3: ist eine Schnittansicht entsprechend B-B der Fig.1.
- Fig. 4: ist eine Schnittansicht entsprechend C-C der Fig.1.

### Detaillierte Beschreibung der Erfindung

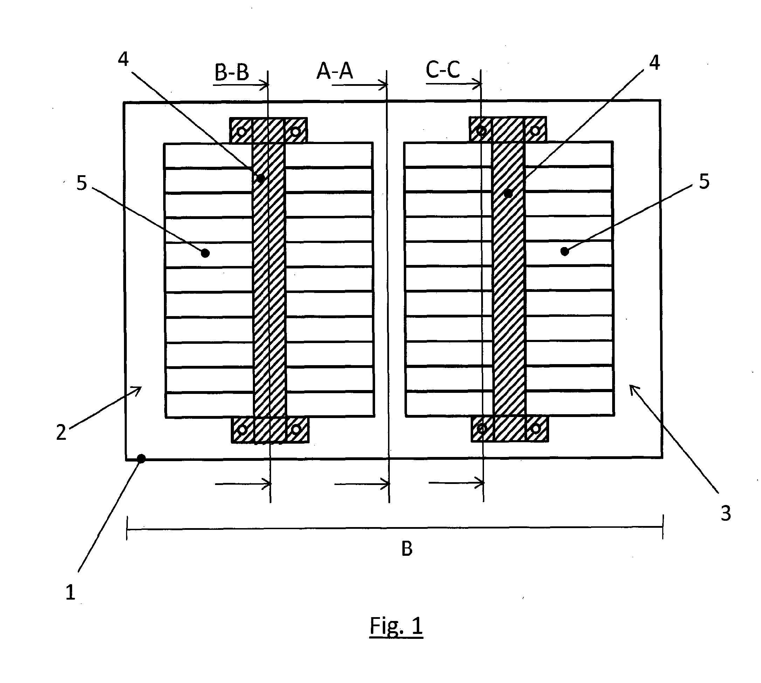

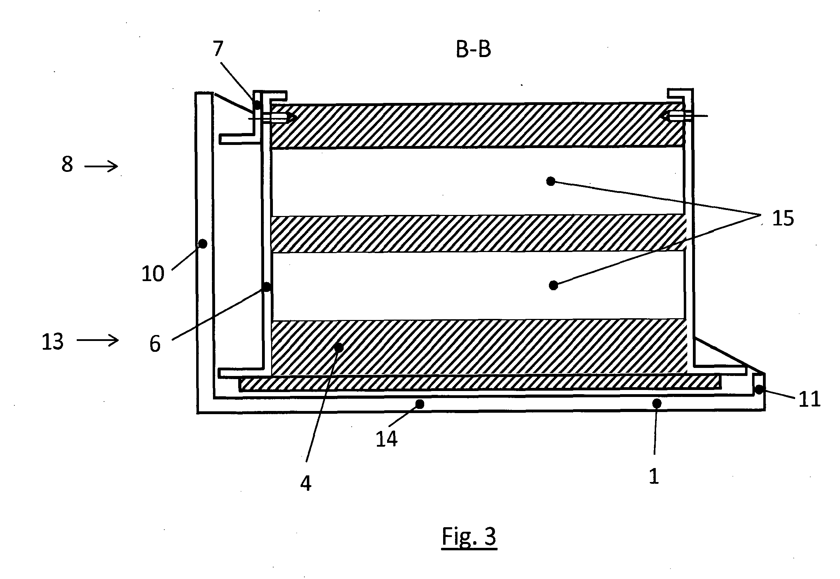

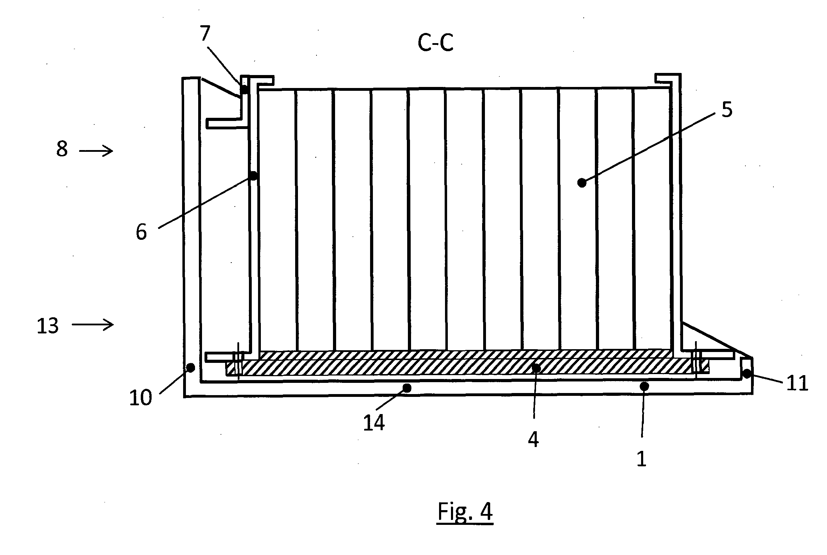

In Fig. 1 ist eine erfindungsgemäßes Batteriesystem dargestellt, dass beispielsweise zum Einbau in einem Kraftfahrzeug vorgesehen sein kann und ein Gehäuse aufweist, dass aus einer Gehäuseschale 1, als in Einbaulage unterer Teil des Gehäuses, und einem hier nicht dargestellten Gehäusedeckel, als in Einbaulage oberem Teil des Gehäuses, besteht. Im Gehäuse sind zwei Batteriemodule 2, 3 nebeneinander entlang der Breite B des Gehäuses angeordnet, die jeweils einen Zellträger 4 aufweisen, der aus einem mit Kühlkanälen 15 versehenen Mittelteil besteht (siehe Fig. 3) welcher sich über die gesamte Höhe der Zellen 5 zwischen den Zellenstapeln erstreckt und einer Basis, welche zumindest teilweise unterhalb der Zellen 5 angeordnet ist, die Zellen 5 trägt und Befestigungen 12 zu einem Hilfsrahmen 6 aufweist (Fig. 4). Die Zellträger 4 sind in allen Figuren diagonal gestreift dargestellt. Auf den Zellträgern 4 ist jeweils eine Vielzahl von Zellen 5, die einen Stapel von Flachzellen bilden, befestigt.

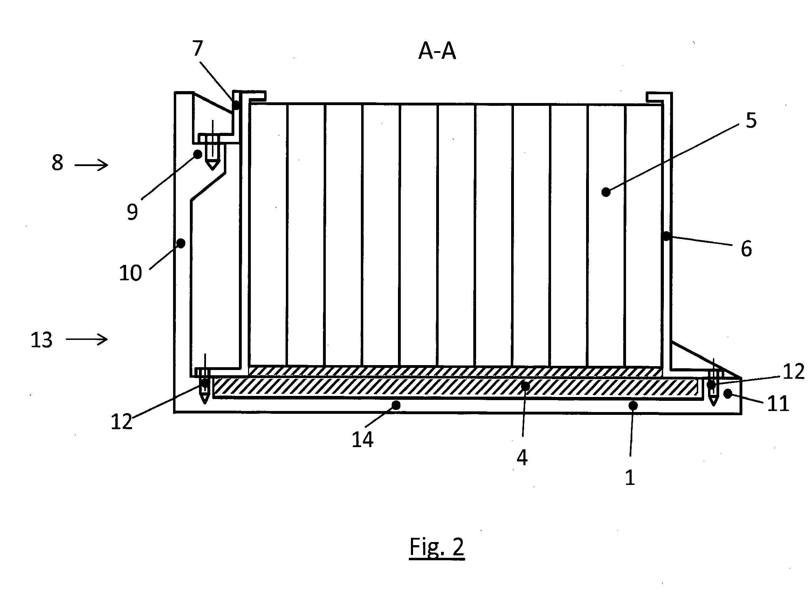

Wie in Fig. 2 dargestellt, ist der Hilfsrahmen 6, der sich im wesentlich flach entlang der Breite B der Gehäuseschale zu beiden Seiten der Zellenstapel erstreckt, mit der Gehäuseschale 1 über Befestigungen 12 verbunden. Diese Befestigungen 12 liegen, in Bezug auf die Breite B der Gehäuseschale 1, zwischen den Zellträgern 4, insbesondere zwischen den Mittelteilen der Zellträger 4, also in der dargestellten Schnittebene A-A, so wie auch die Befestigung des L-förmigen Bügels 7 an einer waagrechten Flanschfläche 9 der höheren Seitenwand 10 der Gehäuseschale 1. Die niedrigere Seitenwand 11 der Gehäuseschale ist in Einbaulage in einem Kraftfahrzeug derart festgelegt, dass sie von zu erwarteten äußeren Kräften, also von der Fahrzeugaußenseite, weg weist.

Der Bügel 7 weist beispielsweise eine höhere Steifigkeit auf als der Hilfsrahmen 6 und erstreckt sich, wieder in Bezug auf die Breite B der Gehäuseschale 1, zumindest von einem Zellträger 4, insbesondere dem Mittelteil des Zellträgers 4, zu einem benachbarten Zellträger 4, bzw. dessen Mittelteil. Der Bügel 7 weist einen rechten Winkel auf, so dass ein horizontaler Teil des Bügels 7 an der waagrechten Flanschfläche 9 aufliegen und befestigt sein kann und ein vertikaler Teil des Bügels 7 senkrecht am Hilfsrahmen 6 zur Kraftübertragung anliegt und dort gegebenenfalls befestigt ist.

Wie in Fig. 3 ersichtlich, weist der Zellträger 4, insbesondere dessen Mittelteil, Kanäle 15 zur Durchströmung mit einem Kühlfluid auf. Zellträger 4 und Hilfsrahmen 6 sind in der dargestellten Schnittebene B-B, also auf Höhe der Mittelteile der Zellträger 4, miteinander verbunden. Zusätzlich zu dieser Befestigung an der oberen Hälfte 8 des Hilfsrahmens 6, ist der Hilfsrahmen 6 mit den Zellträgern 4 auch in der unteren Hälfte 13 des Hilfsrahmens 6 verbunden, und zwar jeweils mit der Basis des Zellträgers 4, auf welcher die Zellen 5 ruhen (siehe Fig. 4).

### Bezugszeichenliste

- 1: Gehäuseschale
- 2: Batteriemodul
- 3: Batteriemodul
- 4: Zellträger
- 5: Zellen
- 6: Hilfsrahmen
- 7: Bügel
- 8: obere Hälfte des Hilfsrahmens
- 9: Flanschfläche
- 10: höhere Seitenwand
- 11: niedrigere Seitenwand
- 12: Befestigung
- 13: untere Hälfte des Hilfsrahmens
- 14: Grundfläche der Gehäuseschale
- 15: Kühlkanal

- B: Breite der Gehäuseschale

## Patentansprüche

1. Batteriesystem zum Einbau in einem Kraftfahrzeug umfassend ein Gehäuse bestehend aus einer Gehäuseschale (1) und einem Gehäusedeckel, zumindest zwei im Gehäuse angeordnete Batteriemodule (2, 3), jeweils umfassend einen Zellträger (4) und auf dem Zellträger (4) angeordnete Zellen (5), sowie einen Hilfsrahmen (6), wobei die Zellen (5) über den Zellträger (4) mit dem Hilfsrahmen (6) verbunden sind und wobei der Hilfsrahmen (6) mit der Gehäuseschale (1) verbunden ist,
**dadurch gekennzeichnet, dass** der Hilfsrahmen (6) über einen Bügel (7) an der Gehäuseschale (1) abgestützt ist, wobei sich der Bügel (7) zumindest von einem Zellträger (4) zu einem benachbarten Zellträger (4) erstreckt.

2. Batteriesystem nach Anspruch 1,
**dadurch gekennzeichnet, dass** sich der Bügel (7) über die äußersten Zellträger (4) hinaus erstreckt.

3. Batteriesystem nach Anspruch 1 oder 2,
**dadurch gekennzeichnet, dass** eine Befestigung zwischen dem Bügel (7) und der Gehäuseschale (1) zwischen den Zellträgern (4) benachbarter Batteriemodule (2, 3) angeordnet ist.

4. Batteriesystem nach zumindest einem der vorhergehenden Ansprüche,
**dadurch gekennzeichnet, dass** der Bügel (7) in der in Einbaulage oberen Hälfte des Batteriesystems angeordnet ist.

5. Batteriesystem nach zumindest einem der vorhergehenden Ansprüche,
**dadurch gekennzeichnet , dass** der Bügel (7) an der Gehäuseschale (1) an einer Flanschfläche (9) die von einer Seitenwand der Gehäuseschale (1) abgesetzt ist anliegt und vorzugsweise an der Flanschfläche (9) befestigt ist.

6. Batteriesystem nach zumindest einem der vorhergehenden Ansprüche,
**dadurch gekennzeichnet, dass** der Bügel (7) L-förmig oder Z-förmig ausgebildet ist.

7. Batteriesystem nach Anspruch 6,
**dadurch gekennzeichnet, dass** ein in Einbaulage vertikaler Teil des L- oder Z-förmigen Bügels (7) zumindest abschnittsweise Sicken oder Verprägungen aufweist, insbesondere in zumindest einem Abschnitt des Bügels (7), der zwischen zwei Zellträgern liegt.

8. Batteriesystem nach zumindest einem der vorhergehenden Ansprüchen,
**dadurch gekennzeichnet, dass** die Gehäuseschale (1) eine höhere Seitenwand (10) und eine niedrigere Seitenwand (11) umfasst, und dass der Bügel (7) an der höheren Seitenwand (10) der Gehäuseschale (1) abgestützt und bevorzugt befestigt ist.

9. Batteriesystem nach zumindest einem der vorhergehenden Ansprüche,
**dadurch gekennzeichnet, dass** zwischen dem Hilfsrahmen (6) und der Gehäuseschale (1) zumindest eine direkte Befestigung (12) eingerichtet ist, insbesondere in der in Einbaulage unteren Hälfte (13) des Hilfsrahmens (6).

10. Batteriesystem nach Anspruch 8,
**dadurch gekennzeichnet, dass** zwischen dem Hilfsrahmen (6) und der höheren Seitenwand (10) der Gehäuseschale (1) zumindest eine direkte Befestigung (12) eingerichtet ist und zwischen dem Hilfsrahmen (6) und der niedrigeren Seitenwand (11) der Gehäuseschale (1) zumindest eine direkte Befestigung (12) eingerichtet ist, wobei bevorzugt beide Befestigungen (12) in der in Einbaulage unteren Hälfte (13) des Hilfsrahmens (6) und besonders bevorzugt an Flanschflächen (9) der Gehäuseschalen (1) angeordnet sind.

11. Batteriesystem nach zumindest einem der vorhergehenden Ansprüche,
**dadurch gekennzeichnet, dass** zwischen dem Hilfsrahmen (6) und der Grundfläche (14) der Gehäuseschale (1) zumindest eine, bevorzugt zumindest zwei, direkte Befestigungen (12) eingerichtet sind.

12. Batteriesystem nach zumindest einem der vorhergehenden Ansprüche,
**dadurch gekennzeichnet, dass** der Hilfsrahmen (6) mit den Zellträgern (4) der Batteriemodule (2, 3) in der in Einbaulage oberen Hälfte (8) des Hilfsrahmens (6) und bevorzugt auch in der unteren Hälfte (13) des Hilfsrahmens (6) verbunden ist.

13. Batteriesystem nach Anspruch 8,
**dadurch gekennzeichnet, dass** die höhere Seitenwand (10) und die Grundfläche (14) der Gehäuseschale einen rechten Winkel bilden.

14. Batteriesystem nach Anspruch 13,
**dadurch gekennzeichnet, dass** die niedrigere Seitenwand (11) und die Grundfläche (14) der Gehäuseschale (1) einen Winkel größer als 90 Grad einschließen, insbesondere zwischen 95 und 105 Grad.

15. Batteriesystem nach zumindest einem der vorhergehenden Ansprüche,
**dadurch gekennzeichnet, dass** die Gehäuseschale (1) ein Gussbauteil oder ein Tiefziehteil ist.

## Claims

1. A battery system for installation in a vehicle, comprising a housing consisting of a housing shell (1) and a housing cover, at least two battery modules (2, 3) arranged in the housing, respectively comprising a cell carrier (4) and cells (5) arranged on the cell carrier (4), and an auxiliary frame (6), wherein the cells (5) are connected to the auxiliary frame (6) by the cell carrier (4), and wherein the auxiliary frame (6) is connected to the housing shell (1),
**characterized in that** the auxiliary frame (6) is supported against the housing shell (1) by a bracket (7), wherein the bracket (7) extends at least from one cell carrier (4) to an adjacent cell carrier (4).

2. The battery system according to claim 1,
**characterized in that** the bracket (7) extends beyond the outermost cell carrier (4).

3. The battery system according to claim 1 or 2,
**characterized in that** a fastener is arranged between the bracket (7) and the housing shell (1) between the cell carriers (4) of adjacent battery modules (2, 3).

4. The battery system according to at least one of the preceding claims,
**characterized in that** the bracket (7) is arranged in the upper half of the battery system in the installation position.

5. The battery system according to at least one of the preceding claims,
**characterized in that** the bracket (7) rests on the housing shell (1) at a flange surface (9) spaced from a side wall of the housing shell (1) and is preferably attached to the flange surface (9).

6. The battery system according to at least one of the preceding claims,
**characterized in that** the bracket (7) is formed in an L-shape or a Z-shape.

7. The battery system according to claim 6,
**characterized in that** a part of the L- or Z-shaped bracket, vertical in the installation position, comprises corrugations or embossments at least in sections, particularly in at least one section of the bracket (7) that is located between two cell carriers.

8. The battery system according to at least one of the preceding claims,
**characterized in that** the housing shell (1) comprises a higher side wall (10) and a lower side wall (11), and **in that** the bracket (7) is supported against the higher side wall (10) of the housing shell (1) and preferably attached thereto.

9. The battery system according to at least one of the preceding claims,
**characterized in that** at least one direct fastener (12) is installed between the auxiliary frame (6) and the housing shell (1), particularly in the lower half (13) of the auxiliary frame (6) in the installation position.

10. The battery system according to claim 8,
**characterized in that** at least one direct fastener (12) is installed between the auxiliary frame (6) and the higher side wall (10) of the housing shell (1) and at least one direct fastener (12) is installed between the auxiliary frame (6) and the lower side wall (11), wherein preferably both fasteners (12) are arranged in the lower half (13) of the auxiliary frame (6) in the installation position and more preferably are arranged at flange surfaces (9) of the housing shells (1).

11. Battery system according to one of the preceding claims,
**characterized in that** at least one, preferably at least two, direct fastener/s (12) is/are installed between the auxiliary frame (6) and the base surface (14) of the housing shell (1).

12. Battery system according to one of the preceding claims,
**characterized in that** the auxiliary frame (6) is connected to the cell carriers (4) of the battery modules (2, 3) in the upper half (8) of the auxiliary frame (6) in the installation position (8) and preferably is also connected thereto in the lower half (13) of the auxiliary frame (6).

13. Battery system according to claim 8,
**characterized in that** the higher side wall (10) and the base surface (14) of the housing shell form a right angle.

14. Battery system according to claim 13,
**characterized in that** the lower side wall (11) and the base surface (14) of the housing shell (1) form an angle of more than 90 degrees, and particularly between 95 and 105 degrees.

15. Battery system according to at least one of the preceding claims,
**characterized in that** the housing shell (1) is a cast component or a deep-drawn part.

## Revendications

1. Système de batterie destiné à être monté dans un véhicule automobile, comportant un carter constitué d'une cuve (1) et d'un couvercle, au moins deux modules de batterie (2, 3) disposés dans le carter, qui comportent chacun un porte-cellules (4) et des cellules (5) disposées sur le porte-cellules (4), ainsi qu'un cadre auxiliaire (6), lesdites cellules (5) étant reliées au cadre auxiliaire (6) par l'intermédiaire du porte-cellules (4), et ledit cadre auxiliaire (6) étant relié à la cuve (1),
**caractérisé en ce que** le cadre auxiliaire (6) est mis en appui sur la cuve (1) par l'intermédiaire d'un étrier (7), ledit étrier (7) s'étendant au moins à partir d'un porte-cellules (4) vers un porte-cellules (4) adjacent.

2. Système de batterie selon la revendication 1, **caractérisé en ce que** l'étrier (7) s'étend au-delà des porte-cellules (4) extrêmes.

3. Système de batterie selon la revendication 1 ou 2, **caractérisé en ce qu'**une fixation entre l'étrier (7) et la cuve (1) est disposée entre les porte-cellules (4) des modules de batterie (2, 3) adjacents.

4. Système de batterie selon au moins l'une quelconque des revendications précédentes, **caractérisé en ce que** l'étrier (7) est disposé dans la moitié supérieure, dans la position montée, du système de batterie.

5. Système de batterie selon au moins l'une quelconque des revendications précédentes, **caractérisé en ce que** l'étrier (7) est en appui sur la cuve (1), sur une surface formant collet (9) qui se décroche d'une paroi latérale de la cuve (1), et est fixé de préférence sur la surface formant collet (9).

6. Système de batterie selon au moins l'une quelconque des revendications précédentes, **caractérisé en ce que** l'étrier (7) est réalisé en forme de L ou en forme de Z.

7. Système de batterie selon la revendication 6, **caractérisé en ce qu'**une partie verticale, dans la position montée, de l'étrier (7) en forme de L ou de Z comporte au moins par zones des nervures ou rainures, notamment dans au moins une zone de l'étrier (7) située entre deux porte-cellules.

8. Système de batterie selon au moins l'une quelconque des revendications précédentes, **caractérisé en ce que** la cuve (1) comporte une paroi latérale haute (10) et une paroi latérale basse (11), et **en ce que** l'étrier (7) est en appui et, de préférence, fixé sur la paroi latérale haute (10) de la cuve (1).

9. Système de batterie selon au moins l'une quelconque des revendications précédentes, **caractérisé en ce qu'**entre le cadre auxiliaire (6) et la cuve (1) est aménagée au moins une fixation (12) directe, en particulier dans la moitié inférieure (13), dans la position montée, du cadre auxiliaire (6).

10. Système de batterie selon la revendication 8, **caractérisé en ce qu'**entre le cadre auxiliaire (6) et la paroi latérale haute (10) de la cuve (1) est aménagée au moins une fixation (12) directe et entre le cadre auxiliaire (6) et la paroi latérale basse (11) de la cuve (1) est aménagée au moins une fixation (12) directe, les deux fixations (12) étant disposées de préférence dans la moitié inférieure (13), dans la position montée, du cadre auxiliaire (6) et en particulier, de préférence, sur des surfaces formant collet (9) des cuves (1).

11. Système de batterie selon au moins l'une quelconque des revendications précédentes, **caractérisé en ce qu'**au moins une, de préférence au moins deux fixations directes (12) sont aménagées entre le cadre auxiliaire (6) et la surface de base (14) de la cuve (1).

12. Système de batterie selon au moins l'une quelconque des revendications précédentes, **caractérisé en ce que** le cadre auxiliaire (6) est relié aux porte-cellules (4) des modules de batterie (2, 3) dans la moitié supérieure (8), dans la position montée, du cadre auxiliaire (6) et, de préférence aussi, dans la moitié inférieure (13) du cadre auxiliaire (6).

13. Système de batterie selon la revendication 8, **caractérisé en ce que** la paroi latérale haute (10) et la surface de base (14) de la cuve forment un angle droit.

14. Système de batterie selon la revendication 13, **caractérisé en ce que** la paroi latérale basse (11) et la surface de base (14) de la cuve (1) forment un angle supérieur à 90 degrés, en particulier entre 95 et 105 degrés.

15. Système de batterie selon au moins l'une quelconque des revendications précédentes, **caractérisé en ce que** la cuve (1) est une pièce coulée ou une pièce emboutie.
